# EUROPÄISCHE PATENTSCHRIFT

(11) **EP 0 835 789 B1**
(45) Veröffentlichungstag und Bekanntmachung des Hinweises auf die Patenterteilung: **27.12.2000**
(21) Anmeldenummer: 97116485.0
(22) Anmeldetag: 22.09.1997
(51) Int. Cl.: B60R 21/26

(54) **Druckgasspeicher für ein Fahrzeuginsassen-Rückhaltesystem**
Pressure accumulator for a vehicle passenger restraint system
Réservoir de pression pour un système de retenue d'un passager de véhicule

(30) Priorität: 09.10.1996 DE 29617587 U
(43) Veröffentlichungstag der Anmeldung: 15.04.1998
(73) Patentinhaber: TRW Occupant Restraint Systems GmbH & Co. KG, 73551 Alfdorf (DE)
(72) Erfinder: Bosio, Allen C., 63741 Aschaffenburg (DE)
(74) Vertreter: Kitzhofer, Thomas, Dipl.-Ing.

(56) Entgegenhaltungen:
- DE-C- 4 234 276
- GB-A- 2 287 776
- US-A- 3 638 964
- US-A- 5 195 777
- "AIR BAG INFLATOR HAVING A VARIABLE AREA GAS EXIT ORIFICE" RESEARCH DISCLOSURE, Nr. 391, November 1996, Seite 727/728 XP000680925

## Beschreibung

Die Erfindung betrifft einen Druckgasspeicher für ein Fahrzeuginsassen-Rückhaltesystem, mit einem Speicherbehälter, in dem Gas unter hohem Druck langzeitig gespeichert wird, das ansprechend auf ein Auslösesignal durch Aktivierung einer pyrotechnischen Ladung plötzlich freigesetzt wird, wobei wenigstens eine Ausströmöffnung des Speicherbehälters freigelegt wird, durch die das Gas aus dem Speicherbehälter austritt. Ferner betrifft die Erfindung ein Gassackmodul mit einem erfindungsgemäßen Druckgasspeicher und einem Gassack.

Derartige Druckgasspeicher können als bekannt gelten.

Druckgasspeicher, insbesondere zum Aufblasen eines Gassacks in einem Fahrzeug, werden im Kollisionsfall geöffnet, so daß gespeichertes Gas aus ihm austritt und den Gassack aufbläst. Der Gassack sollte innerhalb einer sehr kurzen Zeitspanne vollständig entfaltet sein, wobei für eine schnelle Füllung ein hoher Gasdruck erforderlich ist. Ein anfangs hoher Gasdruck kann aber für den beginnenden Entfaltungsvorgang des Gassacks, wenn dieser aus seiner Abdeckung oder dem Gassackmodul noch nicht herausgetreten ist, hinderlich sein, was bislang jedoch nicht vermieden werden konnte.

Die Erfindung schafft einen Druckgasspeicher, bei dem sich der Verlauf der ausströmenden Gasmenge während des Ausströmvorgangs verändert, ohne daß technisch aufwendige Steuerungseinrichtungen vorgesehen sind. Bei einem Druckgasspeicher der eingangs genannten Art wird dies erfindungsgemäß dadurch erreicht, daß die physikalischen und/oder chemischen Eigenschaften des Gases bei dessen Freisetzung und die Eigenschaften des die Ausströmöffnung berandenden Materials dergestalt aufeinander abgestimmt sind, daß dieses Material im Verlaufe des Gasaustritts durch Erosion und/oder Verbrennung angegriffen wird und sich der Strömungsquerschnitt der Ausströmöffnung in zumindest annähernd vorherbestimmtem Ausmaß vergrößert. Abhängig vom gewählten Material, der Geometrie und dem Aufbau der Wandung in Verbindung mit Parametern des ausströmenden Gases (z.B. Gasdruck oder Gastemperatur) läßt sich der Verlauf der Querschnittsflächenvergrößerung über der Zeit relativ exakt vorbestimmen, so daß sich Druckverläufe, die konträren Anforderungen gerecht werden und mit einem herkömmlichen Druckgasspeicher nicht erreichbar waren, erzielen lassen.

Die abbaubare oder zerstörbare Wandung wird vorzugsweise durch eine am Speicherbehälter befestigte Diffusorblende gebildet. Der eigentliche Speicherbehälter kann deshalb immer gleich aufgebaut sein, wogegen die Diffusorblende auf den gewünschten Verlauf der Änderung der Querschnittsfläche abgestimmt sein kann. Die Wandung kann aus einem oder aus mehreren Materialien bestehen. Z.B. kann mindestens ein ringförmiger Einsatz aus erodierbarem und/oder verbrennbarem Material vorgesehen sein, der die Ausströmöffnung begrenzt und der für den gewünschten Verlauf der Änderung der Querschnittsfläche über der Zeit sorgt.

Es können entsprechend auch mehrere aufeinanderfolgende, ringförmige Schichten aus unterschiedlichen, die Ausströmöffnung berandenden Materialien vorgesehen sein, die gegenüber dem Erodieren und/oder Verbrennen durch das ausströmende Gas von unterschiedlicher Beständigkeit sind. Wenn sich nach außen hin an das erodierbare und/oder verbrennbare Material ein nicht erodierbares und/oder verbrennbares Material anschließt, weist der Druckgasspeicher während des Ausströmvorgangs, sobald das näher zur Ausströmöffnung gelegene Material entfernt worden ist, eine konstante Ausströmquerschnittsfläche auf.

Ein erfindungsgemäßes Gassackmodul für ein Fahrzeuginsassen-Rückhaltesystem, das einen Gassack und einen erfindungsgemäßen Speichergasbehälter aufweist, ist so ausgebildet, daß die Querschnittsflächenänderung der Ausströmöffnung und die ausströmende Gasmenge so auf das Gassackvolumen abgestimmt sind, daß sich ein anfangs flacher und anschließend sehr steiler Kurvenverlauf des Gassackinnendrucks über der Zeit ergibt. Zu Beginn des Entfaltungsvorgangs steigt der Gassackinnendruck nicht zu rasch an, so daß sich gefaltete Gassackabschnitte auch nicht gegenseitig verklemmen können.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Fig. 1 einen Teil des erfindungsgemäßen Gassackmoduls mit dem erfindungsgemäßen Druckgasspeicher im Längsschnitt,
- Fig. 2 einen Längsschnitt durch eine Blende des Speichergasbehälters nach Fig. 1 mit einer erodierbaren und/oder verbrennbaren Wandung,
- Fig. 3 ein Diagramm, das den Druckverlauf über der Zeit im Inneren eines Gassacks zeigt, der mit einem herkömmlichen und einem erfindungsgemäßen Druckgasspeicher aufgeblasen wird, und
- Fig. 4 einen Längsschnitt durch eine weitere Ausführungsform des erfindungsgemäßen Druckgasspeichers im Bereich des Ausströmendes.

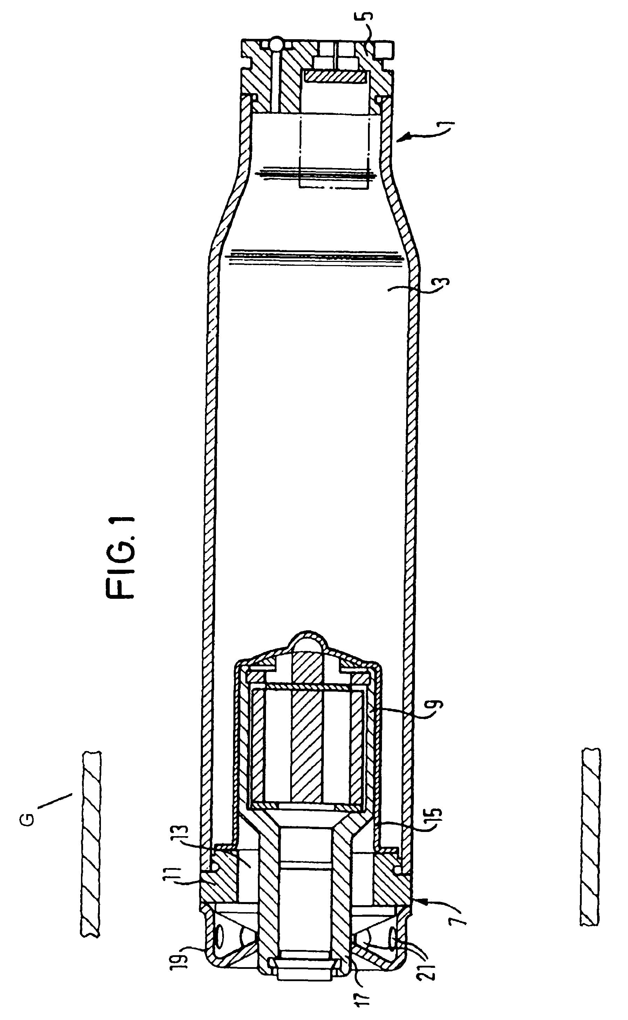

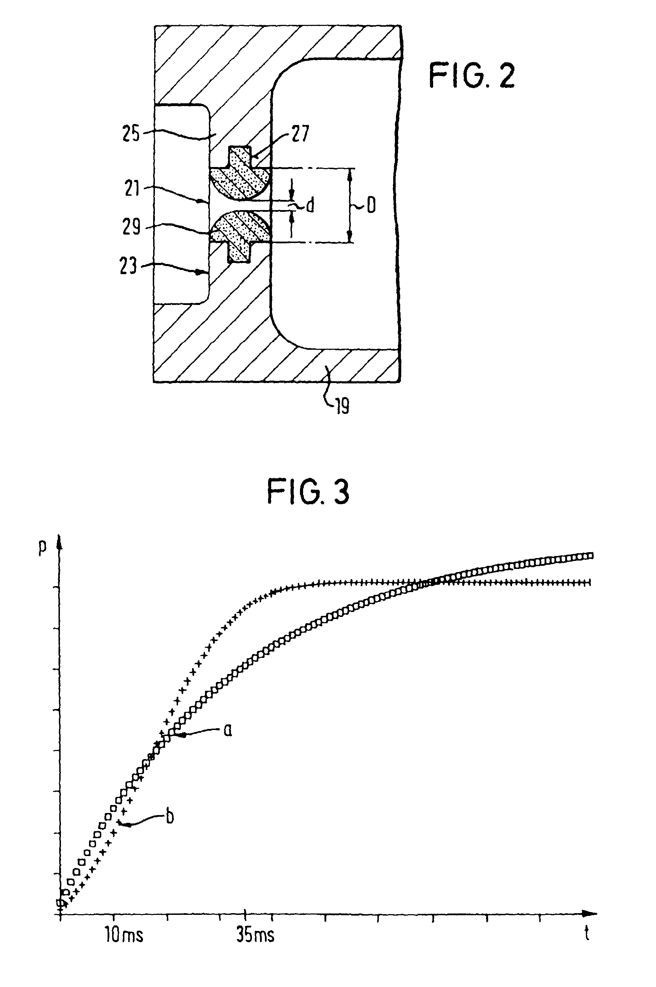

In Fig. 1 ist ein Teil eines Gassackmoduls mit einem Druckgasspeicher gezeigt, der zum Aufblasen eines Gassacks G dient. Im Inneren des Speicherbehälters 1 befindet sich eine mit Edelgas wie Argon und Helium oder mit Luft gefüllte Kammer 3. Das sich in der Kammer 3 befindliche Edelgas oder die Luft steht unter einem Druck von über 200 bar. Einem stirnseitig angeordneten Einfüllende 5 liegt ein Ausströmende 7 gegenüber. Vom Ausströmende 7 aus ragt eine Zündeinheit 9 in das Innere der Kammer 3. Die Zündeinheit 9 umfaßt eine pyrotechnische Ladung, die im Kollisionsfall auf ein Signal hin gezündet wird. Die Stirnwand 11 am Ausströmende 7 weist mehrere auf einem Umfang gleichmäßig verteilte Austrittsbohrungen 13 auf, die im nicht betätigten Zustand durch eine sich zur Zündeinheit 9 erstreckende Wandung 15 gegenüber der Kammer 3 geschlossen sind. Auf einen aus der Stirnwand 11 herausragenden Anschlußzapfen 17 der Zündeinheit 9 ist eine Diffusorblende 19 mit zahlreichen Ausströmöffnungen 21 aufgesetzt, von denen eine in Fig. 2 vergrößert dargestellt ist.

Der Speicherbehälter 1 ragt mit dieser Diffusorblende 19 in das Innere des Gassacks G und bildet mit ihm ein Gassackmodul.

Jede Ausströmöffnung 21 wird von einer kreisringförmigen Wandung 23 begrenzt. Die Wandung 23 besteht aus einem einstückig mit der Diffusorblende 19 verbundenen, radial nach innen ragenden Abschnitt 25 mit einer zur Ausströmöffnung 21 weisenden Ringnut 27. Die Wandung 23 weist ferner einen ringförmigen Einsatz 29 aus gepreßtem keramischen Material auf, das sich in die Ringnut 27 erstreckt, damit der Einsatz 29 in axialer Richtung gegen Verschieben relativ zum Abschnitt 25 gesichert ist. Alternativ kann der Einsatz 29 auch aus Kunststoff bestehen. Der Abschlußrand zur Ausströmöffnung 21 hin ist im Querschnitt gesehen halbkreisförmig.

Die Funktionsweise des Druckgasspeichers wird im folgenden erläutert. Im Kollisionsfall wird die in der Zündeinheit 9 befindliche pyrotechnische Ladung gezündet, so daß zusätzliches Gas in das Innere der Kammer 3 strömt. Der Druck in der Kammer 3 wird dadurch so erhöht, daß die Wandung 15 bricht und Gas durch die Austrittsbohrungen 13 in die Diffusorblende 19 und über die Ausströmöffnungen 21 in das Innere des Gassacks strömt. Durch das mit hohem Druck durch die Ausströmöffnungen 21 strömende Gas wird der Einsatz 29 erodiert, indem das pulverförmige, zusammengepreßte keramische Material abgetragen wird, so daß sich die Querschnittsfläche der Ausströmöffnungen 21 während des Ausströmens vergrößert. Zu Beginn des Ausströmvorgangs hat die Ausströmöffnung 21 noch einen Durchmesser d. Die Querschnittsfläche der Ausströmöffnung 21 vergrößert sich während des Ausströmvorgangs rasch, bis der gesamte Einsatz 29 bis zum Abschnitt 25, der aus stabilerem Material hergestellt ist und nicht erodiert werden kann, abgetragen ist. Die Ausströmöffnung 21 weist dann einen Durchmesser D auf.

Der Verlauf der Vergrößerung der Querschnittsfläche der Ausströmöffnung 21 während des Ausströmvorgangs hängt von dem Material des Einsatzes 29 und des Abschnitts 25, der gegebenenfalls auch abgetragen werden kann, sowie von der Geometrie der gesamten Wandung 23 ab. Bei einem halbkreisförmigen Querschnitt des Einsatzes 29, wie er in Fig. 2 dargestellt ist, muß während des Ausströmvorgangs mit der zunehmenden Breite des Einsatzes 29 zunehmend mehr Material vom Einsatz 29 abgetragen werden, um die Querschnittsfläche der Ausströmöffnung 21 zu vergrößern. Bei einem z.B. radial nach innen konisch spitz zulaufenden Einsatz könnte eine noch schnellere Vergrößerung der Querschnittsfläche der Ausströmöffnung 21 erreicht werden. Ein Einsatz 29 mit einer rechteckigen Querschnittsform sorgt hingegen für eine gleichmäßige, aber langsame Vergrößerung der Querschnittsfläche während des Ausströmvorgangs, da sich die Breite des Einsatzes 29 nicht ändert.

Durch die Materialwahl und die Geometrie der Wandung 23, die physikalischen und/oder chemischen Eigenschaften des ausströmenden Gases und die Geometrie des Gassacks lassen sich auf einfache Weise vorbestimmte Verläufe des Gassackinnendrucks erzielen. In Fig. 3 ist die zeitliche Änderung des Gassackinnendrucks dargestellt, wobei die mit a bezeichnete Kurve den Verlauf des Gassackinnendrucks bei Verwendung eines bislang üblichen Druckgasspeichers mit Ausströmöffnungen mit gleichbleibender Querschnittsfläche und die mit b bezeichnete Kurve den entsprechenden Verlauf bei Verwendung des in den Figuren 1 und 2 gezeigten Druckgasspeichers darstellt. Bei Verwendung herkömmlicher Druckgasspeicher steigt der Gassackinnendruck anfangs linear an und erreicht mit flacher werdender Kurve langsam ein Maximum. Dieser Verlauf ist nachteilig, da zu Beginn des Entfaltens des Gassacks kein zu hoher Druck vorhanden sein sollte. Ein hoher Gassackinnendruck sollte sich hingegen dennoch für eine schnelle Füllung des Gassacks möglichst rasch einstellen. Der bevorzugte Kurvenverlauf, der vorzugsweise ein S-förmiger Kurvenverlauf ist, läßt sich durch den Druckgasspeicher mit erodierbaren Ausströmöffnungen 21 erreichen, bei dem sich die Querschnittsfläche jeder Ausströmöffnung 21 zunehmend vergrößert. Wie Fig. 3 zu entnehmen ist, erreicht der Druck im Inneren des Gassacks bei Verwendung eines derartigen Druckgasspeichers schneller den maximalen Druck als bei Verwendung bislang üblicher Druckgasspeicher, obwohl der Druck zu Beginn des Entfaltens des Gassacks, bis dieser ca. 10 ms nach Zündung aus der Abdeckung tritt, kleiner als bei herkömmlichen Druckgasspeichern ist. Bereits etwa 35 ms nach der Zündung erreicht der durch den erfindungsgemäßen Druckgasspeicher aufgeblasene Gassack seinen maximalen Innendruck.

Das Vergrößern der Querschnittsfläche muß jedoch nicht nur durch Erodieren erfolgen. Wenn in der Kammer 3 ein Gas enthalten ist, das z.B. durch eine chemische Reaktion mit dem durch die Ladung erzeugten Gas stark erwärmt wird, kann die Wandung 23 auch erodiert und zusätzlich verbrannt werden. Das in der Kammer 3 enthaltene Gas kann dabei ein Gemisch aus Luft und 12% Wasserstoff sein. Der ringförmige Einsatz 29 und der Abschnitt 25 bestehen dabei aus einer Aluminium-Magnesiumlegierung, die durch die entstehende Hitze verbrannt wird und teilweise schmilzt und dadurch der Erosion ausgesetzt wird.

Durch die Verbrennung der Wandung 23 wird das ausströmende Gas zusätzlich erhitzt und expandiert, was erwünscht ist, um die Leistung des Druckgasspeichers zu steigern.

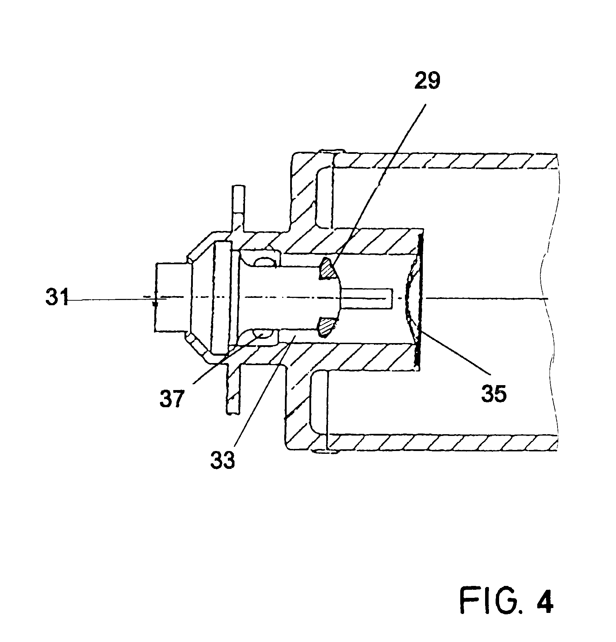

Bei der in Fig. 4 gezeigten Ausführungsform ist eine Zündeinheit 31 vorgesehen, die in einen Ausströmkanal 33 eingesetzt ist. Der außenseitig an der Zündeinheit 31 angebrachte Einsatz 29 definiert den kleinsten Durchströmquerschnitt, der ringförmig ist. Beim Aktivieren der Zündeinheit 31 wird eine die Kammer 3 abdichtende Membrane 35 zerstört. Das Druckgas strömt dann an dem Einsatz 29, der als Blende wirkt, vorbei, erodiert oder verbrennt ihn und gelangt über Öffnungen 37 in den Gassack.

## Patentansprüche

1. Druckgasspeicher für ein Fahrzeuginsassen-Rückhaltesystem, mit einem Speicherbehälter (1), in dem Gas unter hohem Druck langzeitig gespeichert wird, das ansprechend auf ein Auslösesignal durch Aktivierung einer pyrotechnischen Ladung freigesetzt wird, wobei wenigstens eine Ausströmöffnung (21) des Speicherbehälters (1) freigelegt wird, durch die das Gas aus dem Speicherbehälter (1) austritt, dadurch gekennzeichnet, daß die physikalischen und/oder chemischen Eigenschaften des Gases bei dessen Freisetzung und die Eigenschaften des die Ausströmöffnung (21) wenigstens teilweise berandenden Materials dergestalt aufeinander abgestimmt sind, daß dieses Material im Verlaufe des Gasaustritts durch Erosion und/oder Verbrennung angegriffen wird und sich der Strömungsquerschnitt der Ausströmöffnung (21) in zumindest annähernd vorherbestimmtem Ausmaß vergrößert.

2. Druckgasspeicher nach Anspruch 1, dadurch gekennzeichnet, daß die die Ausströmöffnung (21) umgebende Wandung (23) durch eine Blende gebildet ist.

3. Druckgasspeicher nach Anspruch 2, dadurch gekennzeichnet, daß die Blende eine an dem Speicherbehälter (1) befestigbare Diffusorblende (19) ist.

4. Druckgasspeicher nach einem der vorstehenden Ansprüche, dadurch gekennzeichnet, daß die Wandung (23) mindestens einen ringförmigen Einsatz (29) aus einem erodierbaren und/oder verbrennbaren Material aufweist, der die Ausströmöffnung (21) begrenzt.

5. Druckgasspeicher nach einem der vorstehenden Ansprüche, dadurch gekennzeichnet, daß die Wandung (23) um die Ausströmöffnung (21) aus mehreren aufeinanderfolgenden, ringförmigen Schichten aus unterschiedlichen Materialien aufgebaut ist, die gegenüber dem Erodieren und/oder Verbrennen durch das ausströmende Gas von unterschiedlicher Beständigkeit sind.

6. Druckgasspeicher nach Anspruch 4 oder 5, dadurch gekennzeichnet, daß sich an das erodierbare und/oder verbrennbare Material der Wandung (23) ein nicht erodierbares und/oder verbrennbares Material anschließt, um die Vergrößerung des Strömungsquerschnitts wenigstens zu verlangsamen.

7. Druckgasspeicher nach einem der vorstehenden Ansprüche, dadurch gekennzeichnet, daß die Wandung (23) zur Ausströmöffnung (21) hin einen im Querschnitt halbkreisförmigen Abschlußrand aufweist.

8. Druckgasspeicher nach einem der vorstehenden Ansprüche, dadurch gekennzeichnet, daß die Wandung (23) zumindest teilweise aus einer Leichtmetallegierung besteht.

9. Druckgasspeicher nach Anspruch 8, dadurch gekennzeichnet, daß die Wandung (23) zumindest teilweise aus einer Aluminium-Magnesium-Legierung besteht.

10. Druckgasspeicher nach einem der vorstehenden Ansprüche, dadurch gekennzeichnet, daß die Wandung (23) zumindest teilweise aus zusammengepreßtem keramischen Material oder Kunststoff besteht.

11. Druckgasspeicher nach einem der vorstehenden Ansprüche, dadurch gekennzeichnet, daß ein Ausströmkanal vorgesehen ist, dessen kleinster Strömungsquerschnitt die Ausströmöffnung (21) bildet.

12. Druckgasspeicher nach Anspruch 11, dadurch gekennzeichnet, daß der Ausströmkanal einen ringförmigen Querschnitt hat und um eine Zündeinheit zum Öffnen des Druckgasspeichers angeordnet ist.

13. Druckgasspeicher nach Anspruch 12, dadurch gekennzeichnet, daß die Wandung (23) als an der Zündeinheit angebrachter Einsatz (29) ausgebildet ist und der Einsatz (29) und die Zündeinheit eine vormontierte Einheit bilden.

14. Gassack-Modul für ein Fahrzeuginsassen-Rückhaltesystem, mit einem Gassack und einem Druckgasspeicher nach einem der vorstehenden Ansprüche, dadurch gekennzeichnet, daß die Querschnittsflächenänderung der Austrittsöffnung (21) und die ausströmende Gasmenge so auf das Gassackvolumen abgestimmt sind, daß sich ein anfangs flacher und anschließend steiler Kurvenverlauf des Gassackinnendruckes über der Zeit ergibt.

## Claims

1. A compressed gas reservoir for a vehicle occupant restraint system, comprising a storing container (1) in which gas is stored for a long time at high pressure and is suddenly released by activation of a pyrotechnical charge in response to an activating signal, at least one gas exit port (21) of the storing container (1) being opened through which the gas emerges from the storing container (1), characterized in that the physical and/or chemical properties of the gas on it being released and the properties of the material at least partially rimming the gas exit port (21) are adapted to each other such that this material is attacked in the course of the gas exit by erosion and/or combustion and the flow cross-section of the gas exit port (21) is increased to a degree which is at least approximately predetermined.

2. The compressed gas reservoir as set forth in claim 1, characterized in that the wall (23) surrounding the gas exit port (21) is formed by a blind.

3. The compressed gas reservoir as set forth in claim 2, characterized in that the blind is a diffuser blind (19) securable to the storing container (1).

4. The compressed gas reservoir as set forth in any of the preceding claims, characterized in that the wall (23) comprises at least one annular insert (29) made of an erodible and/or combustible material and limiting the gas exit port (21).

5. The compressed gas reservoir as set forth in any of the preceding claims, characterized in that the wall (23) around the gas exit port (21) is composed of several ring-shaped layers, arranged so as to follow one another, of differing materials which have different resistance with respect to erosion and/or combustion by the exit gas.

6. The compressed gas reservoir as set forth in claim 4 or 5, characterized in that a non-erodible and/or non-combustible material adjoins the erodible and/or combustible material of the wall (23), to at least retard enlargement of the flow cross-section.

7. The compressed gas reservoir as set forth in any of the preceding claims, characterized in that the wall (23) comprises an end rim of semi-circular cross-section towards the gas exit port (21).

8. The compressed gas reservoir as set forth in any of the preceding claims, characterized in that the wall (23) consists at least in part of a light metal alloy.

9. The compressed gas reservoir as set forth in claim 9, characterized in that the wall (23) consists at least in part of an aluminum-magnesium alloy.

10. The compressed gas reservoir as set forth in any of the preceding claims, characterized in that the wall (23) consists at least in part of a compressed ceramic material or plastics material.

11. The compressed gas reservoir as set forth in any of the preceding claims, characterized in that a gas exit conduit is provided, the smallest flow cross-section of which forms the gas exit port (21).

12. The compressed gas reservoir as set forth in claim 11, characterized in that the gas exit conduit has an annular cross-section and is arranged around an ignition unit for opening the compressed gas reservoir.

13. The compressed gas reservoir as set forth in claim 12, characterized in that the wall is configured as an insert (29) attached to the ignition unit, the insert (29) and the ignition unit forming a preassembled unit.

14. A gas bag module for a vehicle occupant restraint system, comprising a gas bag and a compressed gas reservoir as set forth in any of the preceding claims, characterized in that the change in the cross-sectional area of the gas exit port (21) and the exit gas flow are adapted to the gas bag volume such that there results an initially flat and subsequently steep curve profile of the gas bag internal pressure versus time.

## Revendications

1. Accumulateur de gaz sous pression pour un système de retenue de passagers d'un véhicule, avec un réservoir de stockage (1), dans lequel on stocke du gaz sous haute pression pendant longtemps, gaz qui est libéré en réponse à un signal de déclenchement par activation d'une charge pyrotechnique, au moins un orifice d'écoulement de sortie (21) du réservoir de stockage (1) étant libéré, orifice à travers lequel le gaz sort du réservoir de stockage (1), caractérisé en ce que les propriétés physiques et/ou chimiques du gaz lors de sa libération et les propriétés de la matière, qui borde au moins en partie l'orifice d'écoulement de sortie (21) sont accordées les unes aux autres d'une manière telle que cette matière soit attaquée au cours de la sortie du gaz par érosion et/ou par combustion et que la section transversale d'écoulement de l'orifice d'écoulement de sortie (21) s'agrandisse dans une mesure prédéterminée de façon au moins approximative.

2. Accumulateur de gaz sous pression selon la revendication 1, caractérisé en ce que la paroi (23), qui entoure l'orifice d'écoulement de sortie (21) est formée par un obturateur.

3. Accumulateur de gaz sous pression selon la revendication 2, caractérisé en ce que l'obturateur est un obturateur de diffuseur (19) que l'on peut fixer sur le réservoir de stockage (1).

4. Accumulateur de gaz sous pression selon l'une des revendications précédentes, caractérisé en ce que la paroi (23) présente au moins un insert (29) de forme annulaire, réalisé en une matière qui peut s'éroder et/ou qui peut brûler et qui délimite l'orifice d'écoulement de sortie (21).

5. Accumulateur de gaz sous pression selon l'une des revendications précédentes, caractérisé en ce que la paroi (23) est construite autour de l'orifice d'écoulement de sortie (21) se composant de plusieurs couches consécutives de forme annulaire réalisées en des matières différentes, qui présentent des résistances différentes vis-à-vis de leur érosion et/ou de leur combustion provoquées par le gaz sortant.

6. Accumulateur de gaz sous pression selon la revendication 4 ou 5, caractérisé en ce qu'une matière, qui ne peut pas s'éroder et/ou qui ne peut pas brûler, se raccorde à la matière de la paroi (23), qui peut s'éroder et/ou qui peut brûler, pour au moins ralentir la croissance de la section transversale d'écoulement.

7. Accumulateur de gaz sous pression selon l'une des revendications précédentes, caractérisé en ce que la paroi (23) présente en direction de l'orifice d'écoulement de sortie (21) un bord de raccordement qui a en section transversale la forme d'un demi-cercle.

8. Accumulateur de gaz sous pression selon l'une des revendications précédentes, caractérisé en ce que la paroi (23) est réalisée au moins en partie en un alliage de métaux légers.

9. Accumulateur de gaz sous pression selon la revendication 8, caractérisé en ce que la paroi (23) est réalisée, au moins en partie, en un alliage d'aluminium et de magnésium.

10. Accumulateur de gaz sous pression selon l'une des revendications précédentes, caractérisé en ce que la paroi (23) est réalisée au moins en partie en une matière céramique compressée ou en matière plastique.

11. Accumulateur de gaz sous pression selon l'une des revendications précédentes, caractérisé en ce que l'on prévoit un canal d'écoulement de sortie, dont la section transversale la plus petite forme l'orifice d'écoulement de sortie (21).

12. Accumulateur de gaz sous pression selon la revendication 11, caractérisé en ce que le canal d'écoulement de sortie a une section transversale de forme annulaire et est disposé autour d'une unité d'allumage qui sert à ouvrir l'accumulateur de gaz sous pression.

13. Accumulateur de gaz sous pression selon la revendication 12, caractérisé en ce que la paroi (23) est constituée comme insert (29) mis sur l'unité d'allumage et en ce que l'insert (29) et l'unité d'allumage forment une unité qui est assemblée au préalable.

14. Module de sac à gaz pour un système de retenue des passagers d'un véhicule, avec un sac à gaz et un accumulateur de gaz sous pression selon l'une des revendications précédentes, caractérisé en ce que la variation de la surface de la section transversale de l'orifice de sortie (21) et la quantité de gaz qui s'écoule au dehors sont ajustées au volume du sac à gaz, et en ce que l'on a une trajectoire de la courbe de la pression intérieure dans le sac à gaz en fonction du temps qui est au début plate et ensuite fortement montante.
